# EUROPEAN PATENT APPLICATION

(11) **EP 1 467 285 A1**
(43) Date of publication of application: **13.10.2004**
(21) Application number: 02715756.9
(22) Date of filing: 16.01.2002
(51) Int. Cl.: G06F 13/14, G06F 3/00, H04M 11/00, H04M 1/00

(54) **PORTABLE TERMINAL, EXTERNAL DEVICE FOR PORTABLE TERMINAL, EXTERNAL DEVICE IDENTIFYING METHOD, AND EXTERNAL DEVICE IDENTIFYING PROGRAM**

(71) Applicant: FUJITSU LIMITED, Kawasaki-shi, Kanagawa 211-8588 (JP)
(72) Inventor: YAMAMOTO, Masahiro, FUJITSU LIMITED, Kawasaki-shi, Kanagawa 211-8588 (JP); MOCHIZUKI, Nobuhiro, FUJITSU LIMITED, Kawasaki-shi, Kanagawa 211-8588 (JP)
(74) Representative: Seeger, Wolfgang, Dipl.-Phys.
(86) International application number: PCT/JP2002/000237
(87) International publication number: WO 2003/060732

(57) **Abstract**

The switch unit of the external equipment (2) connected to the portable terminal device (1) short-circuits the upstream signal line (5) and the downstream signal line (6) while no voltage is being supplied to the control unit (23) so that the signal received from the portable terminal device (1) through the downstream line (6) is turned back at the switch unit (22) to the portable terminal device (1) through the upstream line (5). As a result, even if any external equipment (2) which is powered off is connected to the portable terminal device (1), it is possible for the device (1) to detected the signal turned back from the switch unit (22), thereby recognizing the external equipment (2) as a specific type of equipment having such a switch unit (22), without necessity for altering the number of terminals (lines) required in the connection.

## Description

### FIELD OF THE INVENTION

The present invention relates to an art for recognizing the type of external equipment which is connected to a mobile phone through an interface connector.

### BACKGROUND OF THE INVENTION

In a previous method for recognizing the type of external equipment connected to a mobile phone (hereinafter also called mobile equipment), the mobile phone performs serial communication with the external equipment connected thereto. For instance, if a non-telephone adapter (ADP) with a serial signal transceiving function is connected as such external equipment, an external equipment connection detecting line of the mobile phone is grounded (GND), whereby the mobile equipment detects that some type of external equipment is connected thereto.

At this time, the non-telephone adapter and the mobile equipment are inevitably connected therebetween with an upstream signal line and a downstream signal line. Upon detecting any connection made thereto, the mobile equipment sends a non-telephone control signal (with ADP) to the non-telephone adapter through the downstream serial signal line. Upon receipt of this signal, the non-telephone adaptor sends a non-telephone service request (ADP type notification) to the mobile phone through the upstream signal line for the purpose of notifying the mobile phone of which functions the adaptor supports. Upon receipt of the ADP type notification, the mobile equipment recognizes the type of the non-telephone adaptor connected thereto.

A technique of recognizing the type of external equipment connected to the body of equipment is disclosed in Japanese Patent Application No. HEI 9-258848. This technique (hereinafter called well-known art 1) aims at providing a cost-effective POS (Point of Sales) device having a simplified recognition circuit for recognizing an ID card reader or an ID card reader/writer connected thereto. The device has not only an existing transmission data line terminal and reception data line terminal but also a pair of connection present/absent detecting signal terminals newly equipped thereto. Only either one of the two is electrically connected, whereby the POS device recognizes which one of the ID card reader and the ID card reader/writer is connected thereto.

In addition, another technique is disclosed in Japanese Patent Application No. HEI 11-191090. This technique (hereinafter called well-known art 2) aims at providing an information processing device which recognizes the types of its peripheral devices without increasing the terminals of the connector, and which recognizes a greater number of types of peripheral devices with fewer recognition signal terminals.

More specifically, the information processing device of well-known art 2 includes: a clock line identifying means that identifies which one of the terminals a clock is input into; and a peripheral equipment recognizing means that recognizes the type of a peripheral device based on the terminal identified by the clock line identifying means. While a peripheral device is outputting a clock signal to any of the terminals, it is possible for the information processing device to recognize the type of the peripheral device.

However, even with well-known arts 1 and 2, it is impossible to communicate with such a peripheral device unless the device is powered on, so that it is only possible to detect that a piece of equipment of some type is connected, but the type of the equipment cannot be specified. Therefore, as a matter of course, external equipment and peripheral equipment must have their own power supplies (batteries).

Further, in well-know art 1, the number of terminals required in the connector is increased, so that an existing connector is inapplicable, which necessitates developing a new type of dedicated connector.

With the foregoing problems in view, it is an object of the present invention to make it possible to easily recognize the type of external equipment connected to a mobile phone, without altering the construction (the number of pins) of an existing connector, even while the external equipment is turned off.

### SUMMARY OF THE INVENTION

In order to accomplish the above object, according to the present invention, there is provided external equipment adapted to be connected to a portable terminal device via connecting means which includes an upstream signal line that transfers a signal coming into the portable terminal device and a downstream signal line that transfers a signal going out from the portable terminal device, and the external equipment comprises: a control unit which receives a predetermined operation voltage to control communications between the external equipment and the portable terminal device via the upstream and downstream signal lines; and a switch unit which short-circuits the downstream signal line and the upstream signal line with no such operation voltage being supplied to the control unit.

In the thus-constructed external equipment, the switch unit short-circuits the upstream signal line and the downstream signal line while no voltage is being supplied to the control unit so that a signal received from the portable terminal device through the downstream line is turned back at the switch unit to return to the portable terminal device through the upstream line.

Accordingly, even if any external equipment which is powered off is connected to the portable terminal device, it is possible for the device to detect such a signal turned back from the switch unit, thereby recognizing the external equipment as a specific type of equipment having such a switch unit, without necessity for altering the number of terminals (lines) required in the connecting means.

As a preferred feature, the switch unit opens the short circuit between the downstream signal line and the upstream signal line while operation voltage is being supplied to the control unit. As a result, under a condition where power is supplied to the control unit, the external equipment is capable of performing normal communication with the portable terminal device via the above signal lines.

As another preferred feature, the external equipment have an optional power supply which generates and supplies such operation voltage to the control unit. If the external equipment has no power supply, the control apparatus is supplied with its operation voltage from an internal power supply of the portable terminal device via the connecting means (power supply line). Even if such compact, light-weight external equipment as has no battery of its own is connected, it is possible for the mobile phone to recognize the external equipment as a specific type of equipment with such a switch unit as has been described above, before supplying required voltage to the external equipment.

As a generic feature, the external equipment has an external-equipment-side connector which includes: (1) a downstream signal line connecting terminal adapted to be connected to the downstream signal line connecting terminal of the portable-terminal-device-side connector; (2) an upstream signal line connecting terminal adapted to be connected to the upstream signal line connecting terminal of the portable-terminal-device-side connector; and (3) an external connection terminal adapted to be connected to either one of the external antenna connecting terminals of the portable-terminal-device-side connector so that the portable terminal device recognizes the type of the external equipment according to a logic that depends on connection made to the external antenna connecting terminals of the portable-terminal-device-side connector.

With this feature, upon connection of the external equipment, the portable terminal device detects that some kind of connection is made to only either one of the antenna connecting terminals of its connector, thereby easily recognizing the external equipment as a specific type of equipment having an external connection terminal that is connected to only either one of the external antenna connecting terminals.

Here, as a preferred feature, the external-equipment-side connector includes a power supply terminal which receives operation voltage, to be supplied to the control unit, from an internal power supply of the portable terminal device after the portable terminal device recognizes the type of the external equipment. In this case also, even if such compact, light-weight external equipment as has no battery of its own is connected, it is possible for the mobile phone to recognize the external equipment as such a specific type of equipment as has been described above, before supplying required voltage to the external equipment.

As another preferred feature, the external equipment includes a switch unit which short-circuits the upstream signal line and the downstream signal line while no operation voltage is being supplied to the control unit. With this feature, the portable terminal device is capable of recognizing a greater number of types of equipment, utilizing combination of the following: presence or absence of any connection to the external antenna connecting terminals of the portable terminal device; presence or absence of a signal turned back from the switch unit of the external equipment.

As another generic feature, there is provided an external equipment recognizing program recorded on a computer-readable recording medium, which program instructs a computer of the portable terminal device to recognize a type of external equipment connected to the portable terminal device via connecting means including an upstream signal line that transfers a signal coming into the portable terminal device and a downstream signal line that transfers a signal going out from the portable terminal device. The program instructs the computer to perform the steps of:
(1) sending-out a signal to the external equipment through the downstream signal line without any operation voltage supplied to the external equipment;
(2) receiving the signal returned from the external equipment via a switch unit, which is provided on the external equipment side to short-circuit the downstream signal line and upstream signal line; and
(3) recognizing the external equipment as specific equipment having the switch unit, by receiving the signal in step (2).

Accordingly, by just installing the above external equipment recognizing program therein, the portable terminal device is capable of recognizing the external equipment as a specific type of equipment having such a switch unit as described above, without necessity for altering the number of terminals (lines) required in the connecting means. The program enables the portable terminal device to detect turning back of a signal at the switch unit, whereby the device easily recognizes the equipment type even when the external equipment is powered off. As a result, the portable terminal device functions as a portable terminal device equipped with an external equipment recognizing function.

Other objects and further features of the present invention will be apparent from the following detailed description when read in conjunction with the accompanying drawings.

### BRIEF DESCRIPTION OF THE DRAWINGS

FIG. 1 is a block diagram schematically showing constructions of a mobile phone and external equipment according to a first preferred embodiment of the present invention;
FIG. 2 is a view for describing how the mobile phone of FIG. 1 recognizes the external equipment of FIG. 1 connected thereto;
FIG. 3 is a block diagram schematically showing constructions of a mobile phone and external equipment according to a modified example of the first embodiment;
FIG. 4 is a view for describing how the mobile phone of FIG. 3 recognizes the external equipment of FIG. 3 connected thereto;
FIG. 5 is a block diagram schematically showing constructions of a mobile phone and external equipment according to a second preferred embodiment of the present invention;
FIG. 6 is a block diagram schematically showing a detailed construction in the vicinity of the external antenna connecting terminal (coaxial connector) of FIG. 5;
FIG. 7 is a view for describing how the mobile phone of FIG. 5 recognizes the external equipment of FIG. 5 connected thereto;
FIG. 8 is a block diagram schematically showing constructions of a mobile phone and external equipment according to a modified example of the second embodiment;
FIG. 9 is a view for describing how the mobile phone of FIG. 8 recognizes the external equipment of FIG. 8 connected thereto;
FIG. 10 is a block diagram schematically showing constructions of a mobile phone and external equipment according to a third preferred embodiment of the present invention; and
FIG. 11 is a view for describing how the mobile phone of FIG. 10 recognizes the external equipment of FIG. 10 connected thereto.

### DESCRIPTION OF THE PREFERRED EMBODIMENT(S)

### [A] First embodiment:

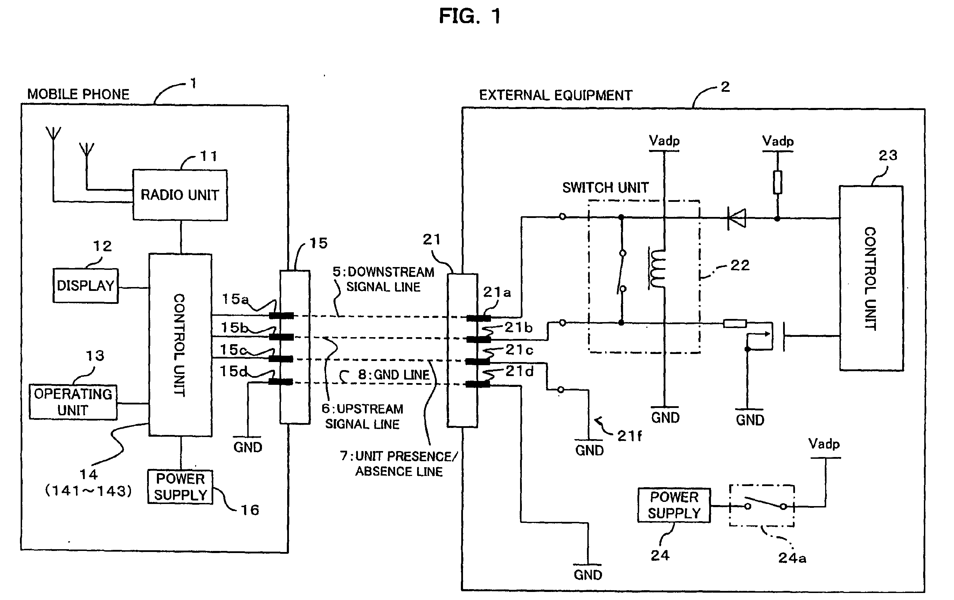

FIG. 1 is a block diagram depicting a first preferred embodiment of the present invention. In FIG. 1, reference number 1 designates a mobile phone (portable terminal device), and reference number 2 designates external equipment connectable to the mobile phone 1. The mobile phone 1 has an interface connector 15 and the external equipment 2 has an interface connector 21, which connectors are connected (fitted) to each other so that the external equipment 2 is connected to the mobile phone 1 through the connectors 15 and 21, which serve as connecting means. An exemplary external equipment 2 is, for example, radio equipment for use in radio communications with a personal computer (PC).

Here, the connector 21 of the external equipment 2 connected to the mobile phone 1, normally complies with the standard [the number (usually 16) of terminals (pins)] of the connector 15 on the mobile phone 1 side to ensure compatibility and versatility. The connector 21 includes: a connecting terminal 21a that is connected with a connecting terminal 15a to form a serial signal line (hereinafter called a downstream line) 5 which transfers a signal in a downstream direction (from mobile phone 1 to external equipment 2); a connecting terminal 21b that is connected to a connecting terminal 15b to form another serial signal line (hereinafter called an upstream line) 6 which transfers a signal in an upstream direction (from external equipment 2 to mobile phone 1); a connecting terminal 21c that is connected to a connecting terminal 15c to form an external equipment connection detecting line (unit presence/absence line) 7; and a connecting terminal 21d that is connected to a connecting terminal (GND terminal) 15d to form a ground (GND) line 8. Note that each of the serial signal lines 5 and 6 transfers a serial signal (for example, an 8-bit serial signal) which meets the standard.

The connectors 15 and 21 with the above-described construction are connected to each other, so that on the mobile phone 1*[sic]*, the downstream signal line 5, the upstream signal line 6, and the equipment connection detecting line (hereinafter also called a connection detecting line) 7 are connected to a control unit 14, and so that on the external equipment 2, the downstream signal line 5 and the upstream signal line 6 are connected to a control unit 23, and the connection detecting line 7 is connected to a GND 21f via a switch unit 22.

In this manner, one of the ends of the connection detecting line 7 is connected to the GND 21f, thereby enabling the mobile phone 1 (control unit 14) to detect and recognize that the external equipment 2 is connected thereto. Here, the above switch unit 22 can short-circuit the downstream signal line 5 and the upstream signal line 6, and a so-called b-contact (break contact) relay switch (hereinafter also called a relay switch 22) is employed as the switch unit 22 in the present example.

That is, the relay switch 22 is in an ON (closed) condition with no operation voltage Vadp for the external equipment 2 supplied from its power supply 24 (the power switch 24a is OFF, that is, the external equipment 2 is powered off), thereby short-circuiting the above signal lines 5 and 6. On the other hand, the relay switch 22 is in an OFF (open) condition with an operation voltage Vadp supplied from the power supply 24 (the power switch 24a is ON, that is, the external equipment 2 is powered on), thereby opening the short-circuit between the signal lines 5 and 6.

As a result, if the external equipment 2 is connected to the mobile phone 1 while the external equipment 2 is powered off, a signal received from the mobile phone 1 through the downstream signal line 5 is turned back into the upstream signal line 6 since the relay switch 22 is in an ON condition, and then the signal returns to the mobile phone 1. In the meantime, while the external equipment 2 is powered on, the relay switch 22 is in an OFF condition, so that a signal received from the downstream signal line 5 is sent to the control unit 23 and a signal sent from the control unit 23, is transmitted to the mobile phone 1 through the upstream signal line 6, thus enabling normal serial communications between the mobile phone 1 and the external equipment 2 (between the control units 14 and 23).

The control units 14 and 23 each perform centralized control of general operation of the mobile phone 1 and the external equipment 2, respectively. The control unit 14 of the mobile phone 1 also carries out: transceiving processing of a radio signal in the radio unit 11; display control on a display 12 offering information to a user; and processing(calling processing,for example)performed in response to a user's operation of the mobile phone 1 through the operating unit 13. The control unit 23 of the external equipment 2 also has a function for notifying the mobile phone 1 of its (external equipment 2's ) type (functions it supports) by controlling serial communication which is established between the external equipment 2 and the mobile phone 1 through the downstream signal line 5 and the upstream signal line 6.

Further, the power supply 16 of the mobile phone 1 supplies operation voltage required by individual parts of the mobile phone 1.

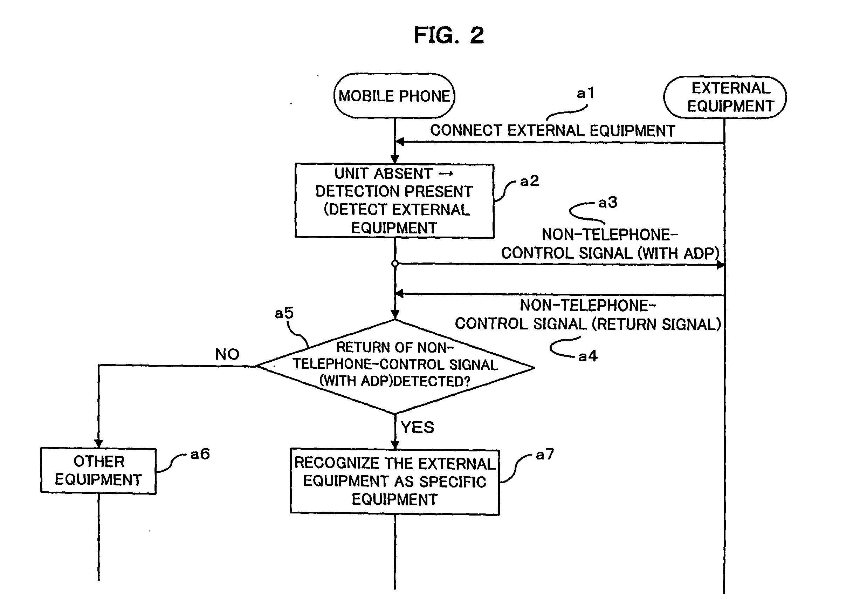

Referring now to FIG. 2, a description will be made hereinbelow of an operation performed by the mobile phone 1 to recognize the external equipment 2 connected thereto as a specific type of equipment having a relay switch 22.

First of all, as shown in FIG. 2, while the external equipment 2 is turned off, it is connected to the mobile phone 1 (step a1). At that time, on the external equipment 2, the equipment connection detecting line 7 is connected to the GND 21f, whereby the mobile phone 1 (control unit 14) detects that the external equipment 2 is connected thereto (step a2).

The control unit 14 of the mobile phone 1 then outputs a non-telephone control signal (with ADP) through the downstream signal line 5 (step a3; signal transmission step). If the external equipment 2 is turned on at this stage, the control unit 23 receives the non-telephone control signal through the downstream signal line 5, and as a response, the external equipment 2 transmits a non-telephone service request (notification about the type of the external equipment 2) to the mobile phone 1 through the upstream signal line 6, thereby notifying the mobile phone 1 of functions the external equipment 2 supports. However, in the example of FIG. 2, since the external equipment 2 is turned off, the non-telephone control signal, received through the downstream signal line 5, is turned back at the relay switch 22 into the upstream signal line 6 and then transmitted to the mobile phone 1 (step a4).

The mobile phone 1 (control unit 14) monitors whether the non-telephone control signal, which the mobile phone 1 itself sends out, returns through the upstream signal line 6 (step a5). If the non-telephone control signal is received within a predetermined time period (if "YES" in step a5; signal receiving step), the mobile phone 1 recognizes that the external equipment 2 connected thereto is a specific type of equipment (equipment having a signal return function realized by the relay switch 22) (step a7; recognizing step).

That is, the control unit 14 of the mobile phone 1 performs the following functions as: (a) a transmitting unit 141 that transmits a signal to the external equipment 2 through the downstream signal line 5; (b) a return detecting unit 142 that detects whether or not the signal transmitted from the transmitting unit 141 to the external equipment 2 is turned back from the relay switch 22, which short-circuits the signal lines 5 and 6, of the external equipment 2 through the upstream signal line 6; (c) a recognizing means 143 that recognizes the external equipment 2 as a specific type of equipment with a relay switch 22 if the return detecting unit 142 detects that the signal has been returned from the external equipment 2.

The foregoing functions are realized by a computer, such as a CPU, that forms the control unit 14. The computer reads predetermined programs (external equipment recognizing programs) from an internal memory or the like of the control unit 14, which programs instruct the computer to carry out the above functions (signal transmitting step; signal receiving step; recognizing step), and operates following the program.

On the other hand, the non-telephone control signal is not returned within the predetermined time period (NO route of step a5), the control unit 14 recognizes the external equipment 2 is not such a specific type of equipment but some other type of equipment (step a6). In this case, while the external equipment is turned on, normal serial communication is performed to recognize the type of the external equipment 2.

In this manner, according to the present embodiment, since the mobile phone 1 detects whether or not the signal sent out through the downstream signal line 5 is turned back at the relay switch 22 of the external equipment 2 into the upstream signal line 6 and then received by the mobile phone 1, it is possible for the mobile phone 1 to detect the external equipment 2 connected thereto as a specific type of equipment having a relay switch 22, even if the external equipment 2 is turned off so that normal serial communication is not available.

In this instance, the foregoing non-telephone control signal can carry some special information [for example, information unique to the manufacturer (maker)] added thereon, for the purpose of improving the reliability of the external equipment recognition. This will go for the following descriptions, too.

Further, the mobile phone 1 only needs to install the above external equipment recognizing program to recognize the external equipment 2 as a specific type of equipment having a relay switch 22, without necessity for altering the number of terminals (lines) used in the connecting means 15 or 21. The program enables the mobile phone 1 to detect turning back of a signal at the relay switch 22, thereby easily recognizing the equipment type, even when the external equipment 2 is powered off.

In other words, by just installing the external equipment recognizing program in an arbitrary mobile phone, it is possible to extend the function of the mobile phone so as to serve as a mobile phone 1 having an external equipment recognizing function, without necessity for adding any special hardware. Likewise, the following external equipment recognizing methods are also realized by installing predetermined programs in a mobile phone.

### (A1) Modified Example of the First Embodiment:

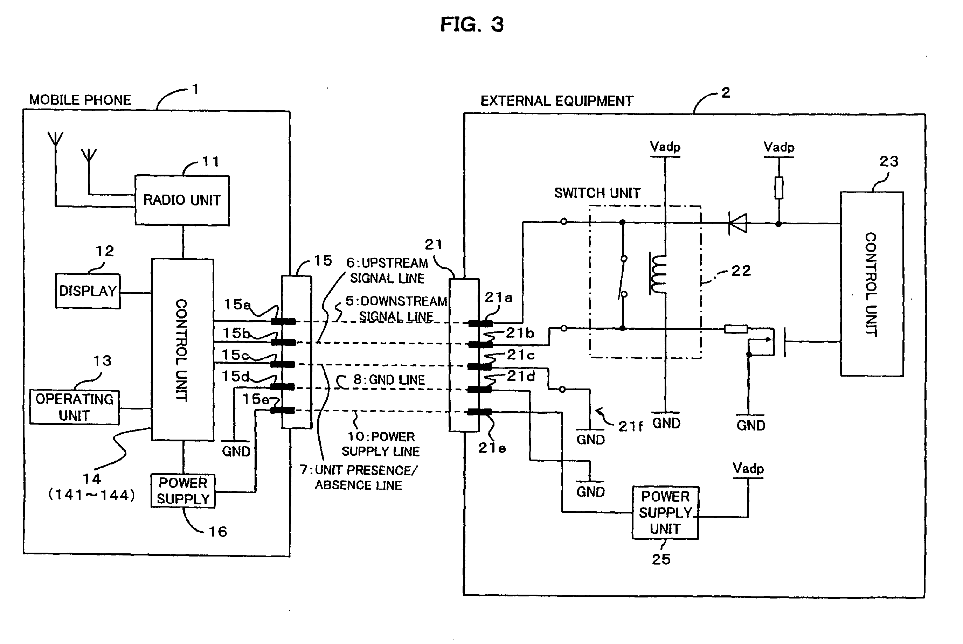

FIG. 3 is a block diagram depicting a modified example of the first embodiment of the present invention. This modification differs from the construction shown in FIG. 1 in that, instead of the power supply 24 equipped to the external equipment 2, the connectors 15 and 21 have power terminals 15e and 21e, respectively, to which a power supply line (10) is to be connected, and the power supply 16 (hereinafter also called an internal power supply 16) of the mobile phone 1 supplies voltage to a power supply unit 25 of the external equipment 2 through the power supply line 10. It is to be noted that the power terminals 15e and 21e (power supply line 10) are not newly added, but spare terminals (spare lines), which are equipped under the standard but whose use is not specified, are utilized as the power terminals 15e and 21e. Like reference numbers and characters designate similar parts or elements throughout several views of the present embodiment and the conventional art, so their detailed description is omitted here.

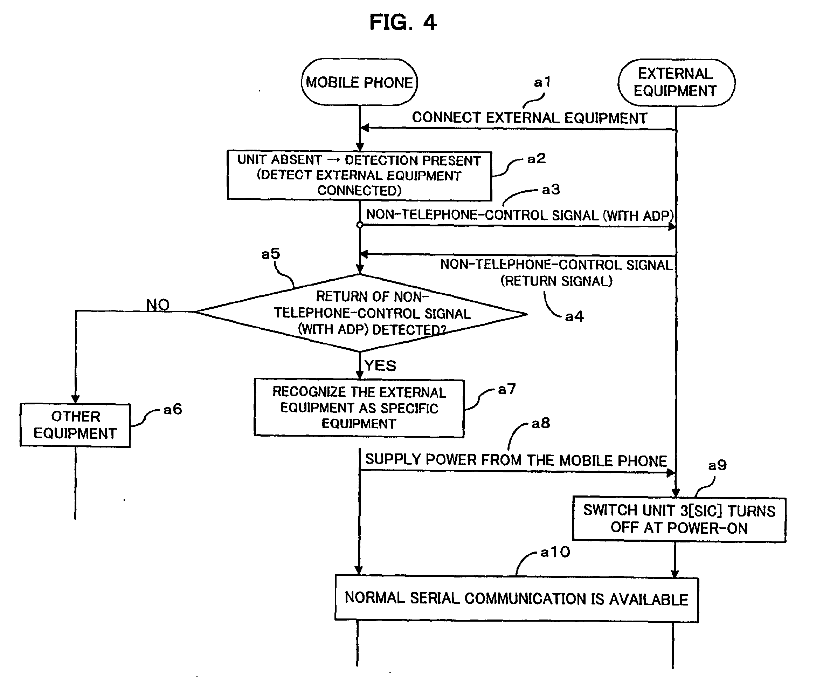

Referring now to FIG. 4, a description will be made hereinbelow of an operation (external equipment recognizing method) performed when the mobile phone 1 and the external equipment 2 of the present modified example are connected to each other. In this case, also, when the external equipment 2 is connected to the mobile phone 1 (step a1), the equipment connection detecting line 7 is connected to the GND 21f on the external equipment 2, whereby the mobile phone 1 (control unit 14) detects that the external equipment 2 is connected thereto (step a2). The control unit 14 of the mobile phone 1 then transmits a non-telephone control signal to the external equipment 2 through the downstream signal line 5 (step a3).

In this example, since the external equipment 2 has no battery, the relay switch 22 is in an ON condition while none of the parts of the external equipment 2 are supplied with power, a signal received through the downstream signal line 5 is turned back directly into the upstream line 6 (step a4). Accordingly, as in the case of the above, the mobile phone 1 (control unit 14) receives the non-telephone control signal returned through the upstream signal line 6 within a predetermined time period, following similar procedures to those in the first embodiment, thereby recognizing the external equipment 2 connected thereto as a specific type of equipment (with a relay switch 22 but with no battery) (from YES route of step a5 to step a7).

The control unit 14 controls the internal power supply 16 of the mobile phone 1 so that power is supplied from the internal power supply 16 to the power supply unit 25 of the external equipment 2 through the power supply line 10 (step a8). That is, the control unit 14 also has a function as a power supply control unit 144 which supplies an operation voltage from the internal power supply 16 of the mobile phone 1 to the external equipment 2 when the above-described recognizing means 143 recognizes the external equipment 2 as a specific type of equipment.

The power supply unit 25, if necessary, converts a voltage value received from the mobile phone 1 into an operation voltage Vadp appropriate for each part of the external equipment 2, and supplies the converted voltage to individual parts of the external equipment 2. In response to this, the relay switch 22 becomes in an OFF condition, thereby releasing (opening) the signal return-back condition between the downstream signal line 5 and upstream signal line 6 (step a9).

This resultantly makes serial communication available between the mobile phone 1 and the external equipment 2 (step a10), by which serial communication the mobile phone 1 can recognize the functions (types) the external equipment 2 supports.

Here, if the returning of the non-telephone control signal is not detected within the above predetermined time (NO route of step a5), as in the case of the first embodiment, the mobile phone 1 (control unit 14) recognizes the external equipment 2 connected thereto as any other type of equipment than the aforementioned specific type equipment (step a6) , and afterward, makes serial communication with the external equipment 2 while it is powered on, thereby recognizing the type (supported functions) of the external equipment.

In this manner, according to the present modification, even if such compact, light-weight external equipment 2 as has no battery of its own is connected, it is possible for the mobile phone 1 to recognize the external equipment 2 as a specific type of equipment, without the necessity of increasing the number of terminals of the connectors 15 and 21, before supplying power from the internal power supply 16 of the mobile phone 1 to the external equipment 2. This feature prevents power being automatically supplied to the external equipment 2 without its type being recognized, thereby causing damage to the external equipment 2.

Further, since the power supply unit 25 of the external equipment 2, if necessary, converts the voltage value supplied from the mobile phone 1 into an operation voltage value Vadp appropriate for an individual part of the external equipment 2 before supplying the voltage, it is possible to consistently supply power to the external equipment 2 in a secure manner, without the necessity of adding any special alteration to the mobile phone 1 such as a voltage value converting function (this means a fixed level of voltage can be supplied from the mobile phone 1 to the external equipment 2).

### (B) Second Embodiment:

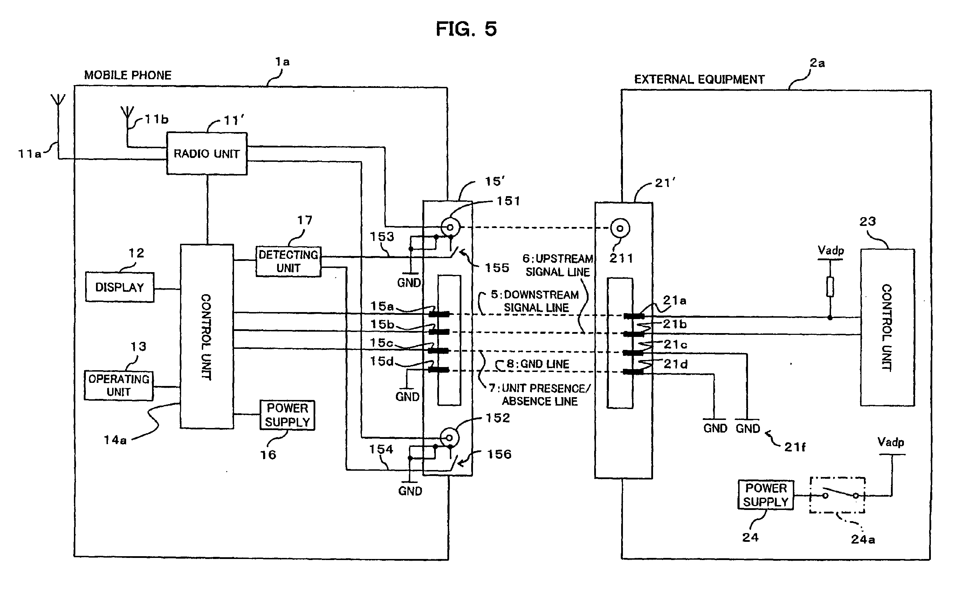

FIG. 5 is a block diagramdepicting a second preferred embodiment of the present invention. As an essential part of the present embodiment, the mobile phone (portable terminal) 1a has a radio unit 11', whip antenna (transceiving antenna; TRX) 11a, internal antenna (receiving antenna; RX) 11b, display 12, operating unit 13, control unit 14a, interface connector 15', power supply 16, and detecting unit (connection detecting unit) 17. Likewise, as the essential part, the external equipment 2a has an interface connector 21' and a control unit 23.

Like in the first embodiment, the interface connector 15' on the mobile phone 1a side has terminals 15a, 15b, 15c, and 15d, prepared for a downstream signal line 5, upstream signal line 6, connection detecting line 7, and GND line 8, respectively. In addition, the interface connector 15' has external antenna connection terminals (coaxial connectors) 151 and 152 prepared in accordance with the standard, to which terminals 151 and 152, the external antennas, one for signal reception (RX) and the other for signal transmission/reception (TRX), of an external antenna module are to be connected, respectively.

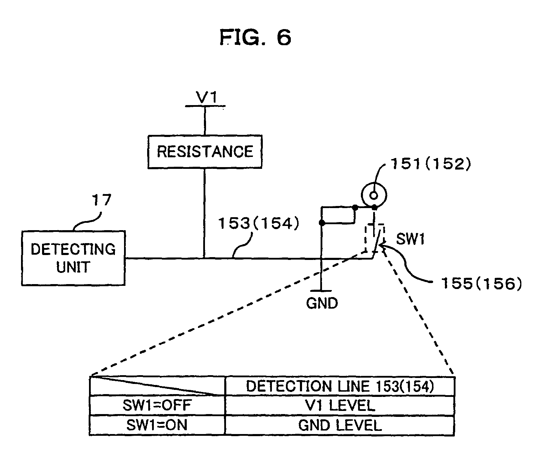

When the external module is actually connected to the coaxial connectors 151 and 152, both the switches 155 and 156 in FIG. 5 and FIG. 6 become in an ON condition, thereby connecting the RX external antenna connection detecting line 153 and the TRX external antenna connection connecting line 154, both of which are connected to the connection detecting unit 17, to the GNDs so that both the lines become L-level (GND level), whereby the connection detecting unit 17 detects that an external antenna module is connected to the mobile phone 1.

Generally speaking, since no other equipment than an external antenna module has a coaxial connector, both the detecting lines 153 and 154 become H-level (V1 level; see FIG. 6) under a condition where no external equipment is connected thereto or where any other type of external equipment with no coaxial connector than such an antenna module, is connected thereto.

The radio unit 11' controls radio function of the mobile phone 1a, and has an antenna switch function which switches between the whip antenna 11a and the internal antenna 11b (or between the external antenna connecting terminal 151 and the external antenna connecting terminal 152 when an external antenna module is connected).

Further, the control unit 14a controls general operation of the mobile phone 1a. In this embodiment, the control unit 14a also serves as a recognizing unit 143a, which recognizes the external equipment 2a as a specific type of equipment other than an external antenna module when the detecting unit 17 detects that only either one of the detecting lines 153 and 154 becomes L-level (0) (that is, as shown in FIG. 5, the external equipment 2a which has a coaxial connector 211 to be connected to only either one of the terminals 151 and 152 is connected).

More specifically, on the basis of a logic (see the following table 1) that depends on whether each of the detecting lines 153 and 154 is H-level or L-level (1 or 0), the control unit 14a recognizes whether the external equipment connected to the mobile phone 1a is an external antenna module, or a specific type of equipment #1, #2, or a type of equipment having no coaxial connector 211 (for example, a device for non-telephone communication).

**Table 1:**

| Detecting Line Logic Table | | |
|---|---|---|
| External Equipment | RX Detecting Line | TRX Detecting Line |
| External Antenna | L | L |
| Specific Equipment #1 | L | H |
| Specific Equipment #2 | H | L |
| External Equipment with No Coaxial Connector (Non-telephone terminal device, etc.) | H | H |

This logic table is stored, for example, in an internal memory (not shown) of the control unit 14a. The display 12, operating unit 13, and power supply 16, of the mobile phone 1 are similar to those described in the first embodiment. The connector 21' of the external equipment 2 is similar to the connector 21 already described with reference to FIG. 1 except for the above-described coaxial connector 211, and has connectors 21a, 21b, 21c, and 21d, to be connected to the downstream signal line 5, upstream signal line 6, connection detecting line 7, and GND line 8, respectively. Further, the control unit 23 of the external equipment 2 is also basically similar to that which is described with reference to FIG. 1, and normal serial communication is available between the control unit 23 and the control unit 14a of the mobile phone 1a through the downstream signal line 5 and upstream signal line 6 so as to recognize the type of the external equipment 2.

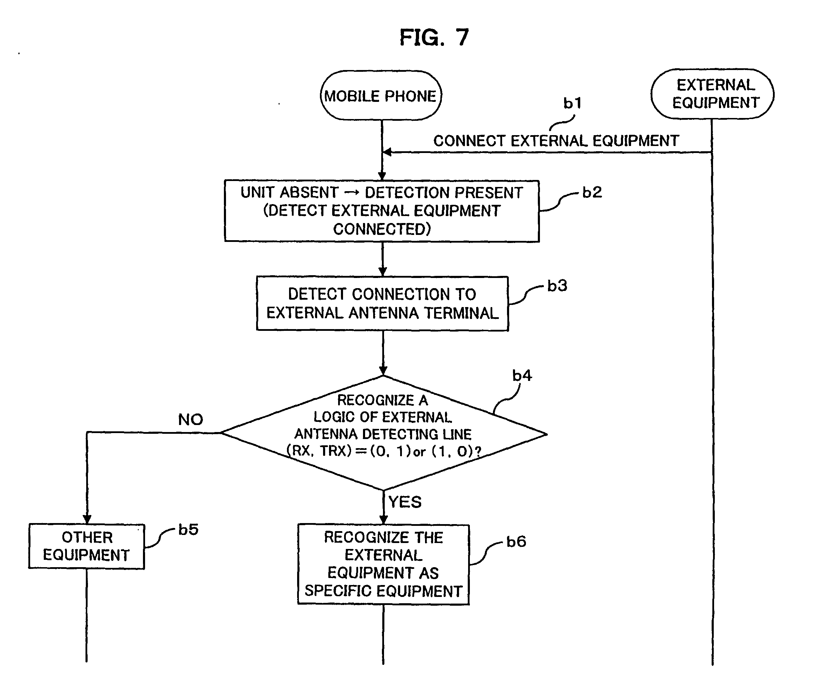

Referring now to FIG. 7, a description will be made hereinbelow of an external equipment recognizing method according to the second embodiment, by which the mobile phone 1a recognizes the external equipment 2a interconnected thereto.

First of all, while the external equipment 2a is turned off, it is connected to the mobile phone 1a (step b1). The connection detecting line 7 becomes GND, whereby the mobile phone 1a (control unit 14a) detects that the external equipment 2a is connected thereto (step b2), and the detecting unit 17 detects that the RX external antenna connection detecting line 153 is H-level, whereby the mobile phone 1a detects that some connection is made to the external antenna connecting terminals 151 (step b3).

Then, the control unit 14a checks the H/L level logic between the RX external antenna connection detecting line 153 and the TRX external antenna connection detecting line 154 (step b4). In this case, the logic (the RX external antenna connection detecting line 153, the TRX external antennaconnectiondetectingline 154) = (0, 1). Referring to the above table 1, the control unit 14a recognizes that the external equipment 2a connected to the mobile phone 1a is a specific type of equipment #1 that has a coaxial connector 211 on the RX external antenna connection detecting line 153 side (YES route of step b4 to step b6).

In contrast to this, if the external equipment 2a has a coaxial connector 211 on the TRX external antenna connection detecting line 154 side, the logic (the RX external antenna connection detecting line 153, the TRX external antenna connection detecting line 154) = (1, 0) . Referring to the table 1, the control unit 14a recognizes that the external equipment 2a connected to the mobile phone 1a is a specific type of equipment #2 that has a coaxial connector 211 on the TRX external antenna connection detecting line 154 side (YES route of step b4 to step b6). Here, it is assumed that the connector 21' of the above specific equipment #1, #2 is designed in such a manner that they cannot be connected to the connector 15' with the coaxial connector 211 positioned upside down.

In other cases than the above, the control unit 14a recognizes that the external equipment connected to the mobile phone 1 is not a specific type of equipment #1 or #2 (NO route of step b4 to step b5).

In this manner, according to the second embodiment, a coaxial connector 211 that is connected to only either one of the external antenna connecting terminals 151 and 152, is provided for the external equipment 2a that is connected to the mobile phone 1a through an interface connector 15' which has two types (TRX and RX) of external antenna connecting terminals (coaxial connectors) 151 and 152, and the connection detecting unit 17 of the mobile phone 1a detects an H/L level logic between the detecting lines 153 and 154. As a result, it is possible for the mobile phone 1a to recognize that the external equipment 2a connected thereto is a specific equipment #1 or #2, even while the external equipment 2a is powered off.

### (B1) Modified Example of the Second Embodiment:

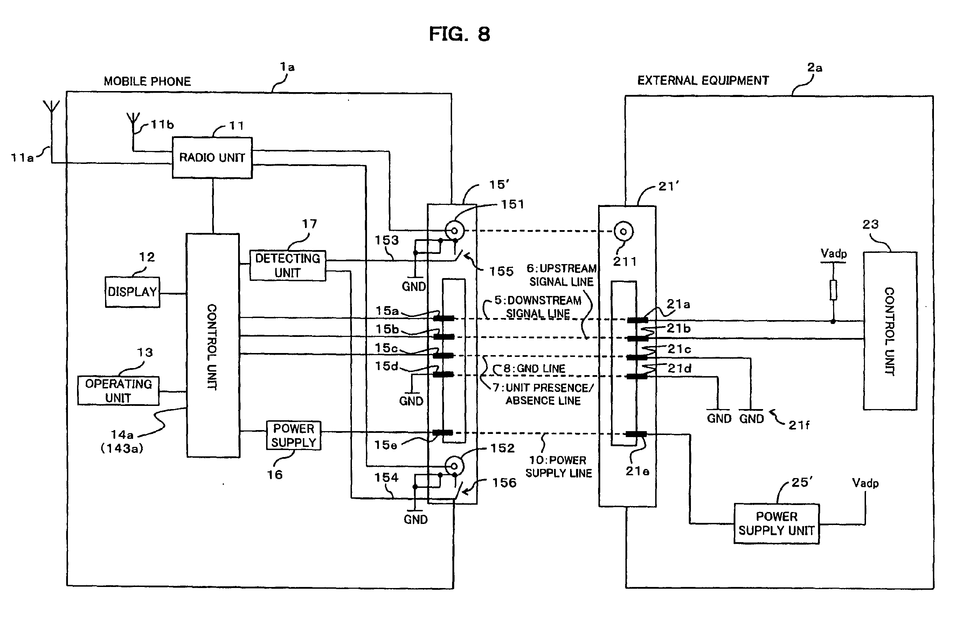

FIG. 8 is a block diagram depicting a modified example of the second embodiment. The relationship between the construction of FIG. 5 and that of FIG. 8 is like the relationship between the construction of the first embodiment (FIG. 1) and that of its modification (FIG. 3). In the construction of FIG. 8, the external equipment 2 has no power supply 24a, and the power terminals 15e and 21e are provided for the interface connectors 15' and 21', respectively, to which a power supply line 10 is connected, and the power supply (internal power supply) 16 of the mobile phone 1a supplies voltage to a power supply unit 25 of the external equipment 2a through the power supply line 10.

It is to be noted that the power terminals 15e and 21e (power supply line 10) are not newly added, but spare terminals (spare lines), which are equipped under the standard but whose use is not specified, are utilized as the power terminals 15e and 21e. In addition, like reference numbers and characters designate similar parts or elements throughout several views of the present embodiment and the conventional art, so their detailed description is omitted here, too.

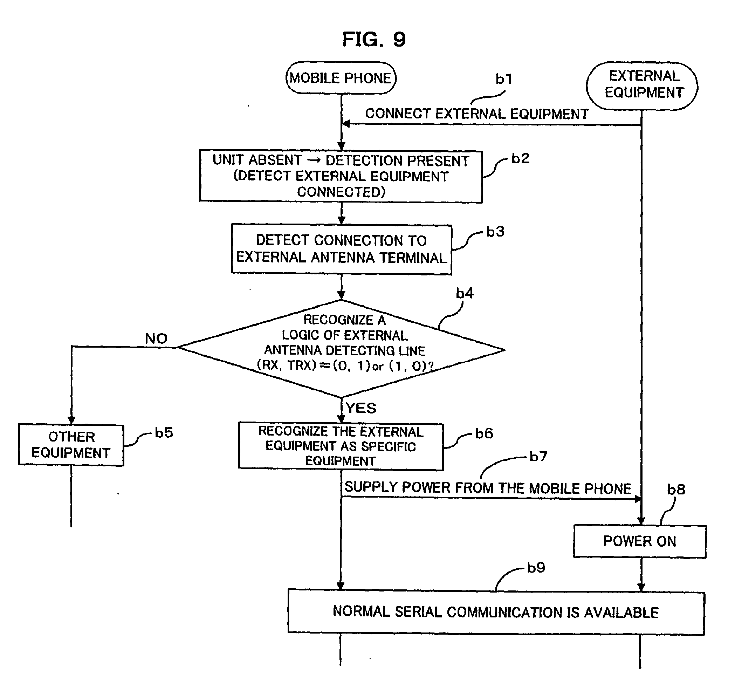

Referring now to FIG. 9, a description will be made hereinbelow of an operation (external equipment recognizing method) performed when the mobile phone 1a and the external equipment 2a of the present modified example are connected to each other. First of all, the external equipment 2a is interconnected to the mobile phone 1a via the connectors 15' and 21'. As in the case of the second embodiment (FIG. 7), referring to the foregoing table 1, the mobile phone 1a (control unit 14a) detects the H/L level logic between the detecting lines 153 and 154, thereby recognizing the external equipment 2a connected thereto as specific equipment #1 (or #2), or as any other type of equipment (step b1 through step b6) .

Then, if the external equipment 2a is recognized as the specific equipment #1 (or #2), the control unit 14a controls the internal power supply 16 to supply power to the power supply unit 25' of the external equipment 2a through the power supply line 10 (step b7). Upon receipt of the power, the power supply unit 25' provides a required voltage (operation voltage) for an individual part, including the control unit 23, of the external equipment 2a, thereby turning the external equipment 2a on (step b8) , so that normal serial communication becomes available between the mobile phone 1a (control unit 14a) and the external equipment 2a (control unit 23) through the downstream signal line 5 and the upstream signal line 6 (step b9).

In this modification, also, even if such a compact, light-weight type of external equipment 2a with no battery of its own is connected to the mobile phone 1a through coaxial connectors 151 and 152, it is still possible for the mobile phone 1a to recognize the external equipment 2a as a specific type of equipment #1 or #2, without the necessity of increasing the number of terminals of the connectors 15' and 21' *[sic]*, and then supply power from the internal power supply 16 of the mobile phone 1a to the external equipment 2a. This feature prevents power being automatically supplied to the external equipment 2a without recognition of its type, thereby causing damage to the external equipment 2a.

### (C) Third embodiment:

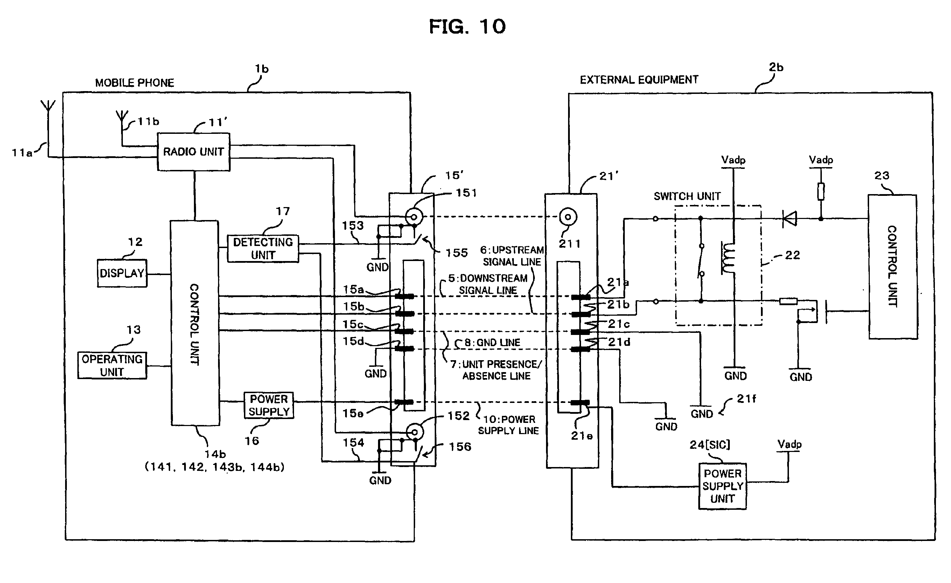

FIG. 10 is a block diagram depicting a third preferred embodiment of the present invention. The external equipment 2b of FIG. 10 is equivalent to the external equipment 2a of the modified example of the second embodiment (see FIG. 8) with a relay switch 22 additionally provided therefore, which has been already described in the first embodiment. More specifically, in the mobile phone 1b of the third embodiment, the control unit 14b recognizes the type of the external equipment 2b connected thereto, based on the H/L level logic between the detecting lines 153 and 154 connected to the coaxial connectors 151 and 152, respectively, and on whether or not a signal is turned back at the relay switch 22 of the external equipment 2b, so as to supply power from the internal power supply 16 to the external equipment 2b*[sic]*.

The control unit 14b of this example is capable of identifying five types of specific equipment #1 through #5 and also recognizing equipment that does not belong to these equipment types. In other words, the control unit 14b serves as a recognizing unit 143b which recognizes the external equipment 2b as a specific type of equipment based on results of detection by the connection detecting unit 17 and the return detecting unit 142. Like reference numbers and characters designate similar parts or elements throughout several views of the present embodiment and the conventional art, so their detailed description is omitted here, too.

**Table 2:**

| Detecting Line & Signal Return Logic Table | | | |
|---|---|---|---|
| Equipment | RX Detecting Line | TRX Detecting Line | Presence/Absence of Signal Return |
| External Antenna | L | L | Absent |
| #1 | L | H | Present |
| #2 | H | L | Present |
| #3 | L | H | Absent |
| #4 | H | L | Absent |
| #5 | H | H | Present |
| Others | H | H | Absent |

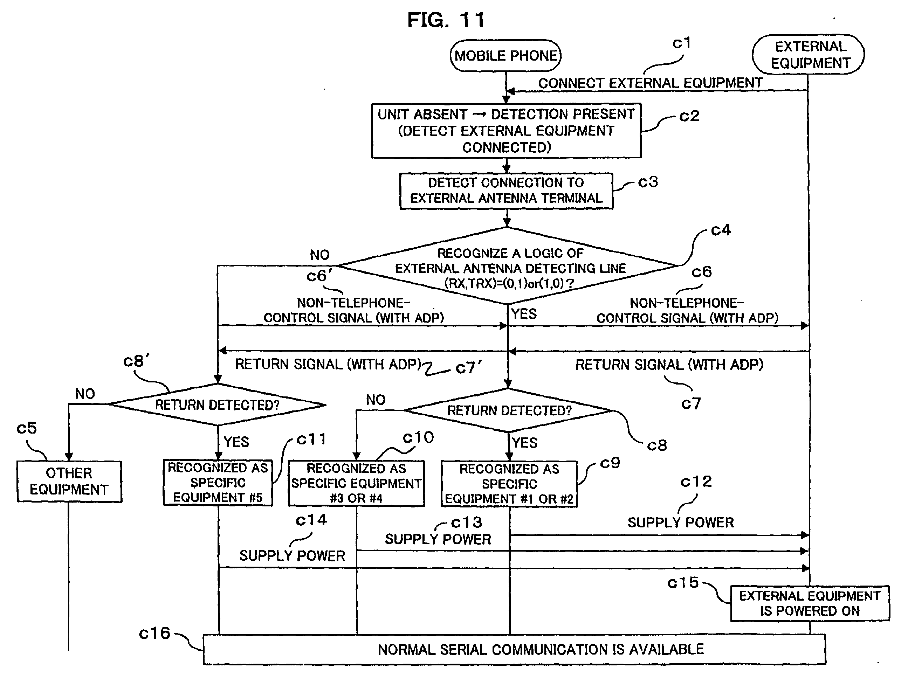

Referring now to FIG. 11, a description will be made hereinbelow of an external equipment recognizing method according to the third embodiment. First of all, the external equipment 2b with no battery of its own is connected to the mobile phone 1b (step c1). The connection detecting line 7 becomes GND, whereby the mobile phone 1b (control unit 14b) detects that the external equipment 2b is connected thereto (step c2), and the detecting unit 17 detects that the detecting line 153 is H-level, whereby the mobile phone 1b detects that some connection is made to the coaxial connector 151 (step c3).

Then, the control unit 14b checks the H/L level logic between the detecting lines 153 and 154 (step c4). If the logic (the RX external antenna connection detecting line 153, the TRX external antenna connection detecting line 154) = (0, 1) or (1, 0), the control unit 14b (transmitting unit 141), as in the case of the first embodiment, outputs a non-telephone control signal (with ADP) through the downstream signal line 5 (step c6). Here, since the external equipment 2b has no battery, the non-telephone control signal, received through the downstream signal line 5, is turned back at the relay switch 22 into the upstream signal line 6 and then transmitted to the mobile phone 1b (step c7).

The mobile phone 1b (control unit 14b) monitors whether or not the non-telephone control signal, which the mobile phone 1b itself sends out, returns through the upstream signal line 6 (step c8). If the non-telephone control signal is received within a predetermined time period (if "YES" in step c8), the mobile phone 1b recognizes that the external equipment 2b connected thereto is a specific type of equipment (equipment #1 or #2 with a signal return function realized by the relay switch 22 and with a coaxial connector 211; see Table 2)(step c9).

After this recognition, the control unit 14b of the mobile phone 1b*[sic]* controls the internal power supply 16 to supply power to the external equipment 2b through the power supply line 10 (step c12). Under this condition (the external equipment 2b is powered on) (step c15), the control unit 14b performs normal serial communication with the control unit 23 of the external equipment 2b through the downstream signal line 5 and the upstream signal line 6 (step c16). That is, the control unit 14b also serves as a power supply control unit 144b, which supplies an operation voltage from the internal power supply 16 of the mobile phone 1b*[sic]* to the external equipment 2b when the recognizing means 143b recognizes the external equipment 2b as a specific type of equipment.

Here, if the returning of the non-telephone control signal is not detected within the above predetermined time (NO route of step c8), the control unit 14b recognizes the external equipment 2b connected thereto as a specific type of equipment #3 or #4 (see Table 2) with a coaxial connector 211 but with no relay switch 22 that performs the signal return function (step c10), and supplies power to the equipment #3 or #4 (step c13).

If the H/L level logic between the detecting lines 153 and 154 (detecting line 153, detecting line 154) is not equal to (0, 1) or (1,0) (NO route of step c4), the control unit 14b outputs a non-telephone control signal (with ADP) through the downstream signal line 5 to check whether or not a relay switch 22 is equipped to the external equipment 2b (step c6').

If the non-telephone control signal sent through the downstream signal line 5 is returned, as it is, into the upstream signal line 6 (step c7') and the mobile phone 1b receives the returned signal within a predetermined time period (if "YES" in step c8'), the control unit 14b recognizes that the external equipment 2b is a specific type of equipment #5 (see Table 2) that has no coaxial connector 211 but has a relay switch 22 realizing a signal return function (step c11), and then supplies power to the equipment #5 (step c14)

If none of the above is applicable (if "NO" in each of step c4 and step c8'), the control unit 14b recognizes that the external equipment connected to the mobile phone 1b is some other type of equipment (including an external antenna module) than the forgoing specific equipment #1 through #5 (step c5). Note that even when external equipment having its own battery is connected to the mobile phone 1b*[sic]* while the equipment is turned off, the recognition can be likewise carried out following the foregoing description.

In this manner, according to the third embodiment, the coaxial connector 211 and the relay switch 22 is provided for the external equipment 2b. With this feature, even if external equipment is connected while it is turned off, or even if such a compact, light-weight external equipment with no battery of its own is connected, it is possible to easily recognize a greater number of types of equipment than in the first and the second embodiments, without the necessity of increasing the number of pins equipped to the connectors 15' and 21', which number is determined by a standard.

Here, if any external equipment having its ownbattery is connected to the mobile phone 1b, there is no need to supply power to the external equipment, and it is possible for the mobile phone 1b to recognize the type of the external equipment even while the equipment is turned off, in a manner similar to the above description.

### (D) Others:

In the foregoing embodiments and their modifications, description is made of examples where a mobile phone is applied as a portable terminal device of the present invention. However, the present invention should by no means be limited to thi s, and any other portable information terminals, such as a PDA (Personal Digital Assistance), are also applicable as far as they have a connector for connecting external equipment, which connector satisfies a predetermined standard for maintaining compatibility, and like effects and benefits to those in the above description will also be realized.

Further, in the above embodiments and their modifications, a fixed level of voltage is supplied from a mobile phone to external equipment. However, the present invention should by no means be limited to this, and the level of voltage can be changed on the mobile phone side according to the result of external equipment type recognition, so that an appropriate level of voltage is constantly supplied to the external equipment.

Further, the present invention should by no means be limited to the above-illustrated embodiments and their modified examples, but various changes or modifications may be suggested without departing from the gist of the invention.

### INDUSTRIAL APPLICABILITY

Even if external equipment connected to a mobile phone, which serves as a portable terminal device of the present invention, is turned off, or even if the external equipment has no battery so that communication is not available between the mobile phone and the external equipment to recognize the type of the external equipment, it is still possible for the mobile phone to easily recognize/identify the external equipment as a specific type of equipment, without the necessity of adding any significant alteration to the construction (the number of pins) of an existing connector or to the construction of the external equipment, so that usefulness of the present invention is considered greatly high.

## Claims

1. External equipment (2) adapted to be connected to a portable terminal device (1) via connecting means (15, 21) which includes an upstream signal line (6) that transfers a signal coming into said portable terminal device (1) and a downstream signal line (5) that transfers a signal going out from said portable terminal device (1), said external equipment (2) comprising:
a control unit (23) which is supplied with a predetermined operation voltage and controls communications between said external equipment (2) and said portable terminal device (1) via said upstream and downstream signal lines (5, 6); and
a switch unit (22) which short-circuits said downstream signal line (5) and said upstream signal line (6) with no such operation voltage being supplied to said control unit (23).

2. External equipment as set forth in claim 1, wherein said switch unit (22) is adapted to open the short circuit between said downstream signal line (5) and said upstream signal line (6) with such operation voltage being supplied to said control unit (23).

3. External equipment (2) as set forth in claim 1 or claim 2, further comprising a power supply (24) which generates and supplies such operation voltage to said control unit (23).

4. External equipment (2) as set forth in claim 1 or claim 2, wherein the operation voltage is supplied to said control unit (23) from an internal power supply (16) of said portable terminal device (1) via said connecting means (15, 21).

5. External equipment (2) as set forth in claim 4, wherein said connecting means (15, 21) further includes a power supply line (10) through which the operation voltage is supplied from said internal power supply (16) of said portable terminal device (1) to said control unit (23) of said external equipment (2).

6. A portable terminal device (1) adapted to be connected to external equipment (2) via connecting means (15, 21) which includes a downstream signal line (5) that transfers a signal going-out to said external equipment (2) and an upstream signal line (6) that transfers a signal coming-in from said external equipment (2), said portable terminal device (1) comprising:
a transmitting unit (141) which transmits a signal to said external equipment (2) through said downstream signal line (5);
a return detecting unit (142) which detects whether or not a signal, transmitted from said transmitting unit (141) to said external equipment (2), is switched by a switch unit (22), which short-circuits said downstream and upstream lines (5, 6) in said external equipment (2), to return from said external equipment (2) through said upstream signal line (6); and
a recognizing means (143) which recognizes, if said return detecting unit (142) detects that the signal returns from said external equipment (2), said external equipment (2) as specific equipment having said switch unit.

7. A portable terminal device as set forth in claim 6, further comprising a power control unit (144) which supplies, if said recognizing means (143) recognizes that said external equipment (2) is such specific equipment, an operation voltage for said external equipment (2) from an internal power supply (16) of said portable terminal device (1).

8. A method for recognizing a type of external equipment (2) connected to a portable terminal device (1) via connecting means (15, 21) which includes an upstream signal line (6) that transfers a signal coming into said portable terminal device (1) and a downstream signal line (5) that transfers a signal going out from said portable terminal device (1), said method comprising the steps of:
short-circuiting, on the external equipment side, said downstream signal line (5) and said upstream signal line (6) by a switch unit (22), without any operation voltage being supplied to said external equipment (2), so as to return a signal, received from said portable terminal device (1), back to said portable terminal device (1); and
recognizing, on said portable terminal device (1), said external equipment (2) as specific equipment having said switch unit (22), by receiving the signal that is returned from said external equipment (2) by means of said switch unit (22).

9. A method as set forth in claim 8, further comprising the step of supplying, if said external equipment (2) is recognized to be such specific equipment on said portable terminal device (1), an operation voltage for said external equipment (2) from an internal power supply (16) of said portable terminal device (1) via said connecting means (15, 21).

10. A method as set forth in claim 8 or claim 9, further comprising the step of, if said external equipment (2) is supplied with the operation voltage, opening the short circuit established by said switch unit (22) between said downstream signal line (5) and said upstream signal line (6) so as to enable said portable terminal device (1) and said external equipment (2) to communicate with each other via said connecting means (15, 21).

11. External equipment (2a) adapted to be connected to a portable terminal device (1a) via an
external-equipment-side connector (21') provided for said external equipment (2a) and a
portable-terminal-device-side connector (15') provided for said portable terminal device (1a), which portable-terminal-device-side connector (15') includes:
an upstream signal line connecting terminal (15b) for an upstream signal line (6) transferring a signal coming into said portable terminal device (1a); a downstream signal line connecting terminal (15a) for a downstream signal line (5) transferring a signal going out from said portable terminal device (1a); and two types of external antenna connecting terminals (151, 152), one for signal transmission and reception and the other for signal reception,
said external-equipment-side connector (21') including:
a downstream signal line connecting terminal (21a) adapted to be connected to said downstream signal line connecting terminal (15a) of said portable-terminal-device-side connector (15');
an upstream signal line connecting terminal (21b) adapted to be connected to said upstream signal line connecting terminal (15b) of said portable-terminal-device-side connector (15'); and
an external connection terminal (211) adapted to be connected to either one of the external antenna connecting terminals (151, 152) of said
portable-terminal-device-side connector (15') so that said portable terminal device (1a) recognizes a type of said external equipment (2a) according to a logic that depends on connection made to said external antenna connecting terminals (151, 152) of said portable-terminal-device-side connector (15').

12. External equipment as set forth in claim 11, further comprising a control unit (23) which is supplied with a predetermined operation voltage and controls communications between said external equipment (2a) and said portable terminal device (1a) via said upstream signal line (6) and said downstream signal line (5),
said external-equipment-side connector (21') including a power supply terminal (21e) which receives the operation voltage, to be supplied to said control unit (23), from an internal power supply (16) of said portable terminal device (1a) after said portable terminal device (1a) recognizes the type of said external equipment (2a).

13. External equipment as set forth in claim 11 or claim 12, further comprising a switch unit (22) which short-circuits said upstream signal line (6) and said downstream signal line (5) with no such operation voltage being supplied to said control unit (23).

14. A portable terminal device (1a) with a connector (15') which serves as connecting means adapted to be connected to said external equipment (2a) , which connector (15') includes: an upstream signal line connecting terminal (15b) foranupstreamsignalline (6) transferring a signal going out from said external equipment (2a); a downstream signal line connecting terminal (15a) for a downstream signal line (5) transferring a signal coming into said external equipment (2a) ; and two types of external antenna connecting terminals (151, 152), one for signal transmission and reception and the other for signal reception, said portable terminal device (1a) comprising:
a connection detecting unit (17) which detects whether or not said external equipment (2a) is connected to said portable terminal device (1a) via any of said external antenna connecting terminals (151, 152) of said connector (15'); and
a recognizing unit (143a) which recognizes, if said connection detecting unit (17) detects that said external equipment (2a) is connected to said portable terminal device (1a) via either one of said external antenna connecting terminals (151, 152), said external equipment (2a) as a specific equipment.

15. A portable terminal device (1b) with a connector (15') which serves as connecting means adapted to be connected to said external equipment (2b) , which connector (15') includes: an upstream signal line connecting terminal (15b) foranupstreamsignalline (6) transferring a signal going out from said external equipment (2b); a downstream signal line connecting terminal (15a) for a downstream signal line (5) transferring a signal coming into said external equipment (2b); and two types of external antenna connecting terminals (151, 152), one for signal transmission and reception and the other for signal reception, said portable terminal device (1b) comprising:
a connection detecting unit (17) which detects whether or not said external equipment (2b) is connected to said portable terminal device (1b) via any of said external antenna connecting terminals (151, 152) of said connector (15');
a transmitting unit (141) which transmits a signal to said external equipment (2b) via said downstream signal line (5);
a return detecting unit (142) which detects whether or not a signal, transmitted from said transmitting unit (141) to said external equipment (2b), is switched by a switch unit (22), which short-circuits said downstream and upstream lines (5, 6) in said external equipment (2b), to return from said external equipment (2b) to saidportable terminal device (1b) through said upstream signal line (6); and
a recognizing means (143b) which recognizes said external equipment (2b) as specific equipment, based on detection results of said connection detecting unit (17) and said return detecting unit (142).

16. A portable terminal device as set forth in claim 14 or claim 15, further comprising a power control unit (144b) which supplies, if said recognizing means (143b) recognizes that said external equipment (2b) is such specific equipment, an operation voltage for said external equipment (2b) from an internal power supply (16) of said portable terminal device (2b).

17. A method for recognizing a type of external equipment (2a) connected to said portable terminal device (1a) via a portable-terminal-device-side connector (15') serving as a connecting means, which connector (15') includes: an upstream signal line connecting terminal (15a) for an upstream signal line (6) transferring a signal going out from said external equipment (2a) ; a downstream signal line connecting terminal (15b) for a downstream signal line (5) transferring a signal coming into said external equipment (2a) ; and two types of external antenna connecting terminals (151, 152), one for signal transmission and reception and the other for signal reception, said method comprising the steps of:
monitoring, on said portable terminal device (1a), whether or not said external equipment (2a) is connected to said portable terminal device (1a) via any of said external antenna connecting terminals (151, 152); and
recognizing, if said connection detecting unit (17) detects that said external equipment (2a) is connected to said portable terminal device (1a) via either one of said external antenna connecting terminals (151, 152), said external equipment (2a) as a specific equipment.

18. A method for recognizing a type of external equipment (2b) connected to said portable terminal device (1b) via a portable-terminal-device-side connector (15') serving as a connecting means, which connector (15') includes: an upstream signal line connecting terminal (15b) for an upstream signal line (6) transferring a signal going out from said external equipment (2b) ; a downstream signal line connecting terminal (15a) for a downstream signal line (5) transferring a signal coming into said external equipment (2b) ; and two types of external antenna connecting terminals (151, 152), one for signal transmission and reception and the other for signal reception, said method comprising the steps of:
(*i*) monitoring, on said portable terminal device (1b), whether or not said external equipment (2b) is connected to said portable terminal device (1b) via any of said external antenna connecting terminals (151, 152), and also, whether or not a signal transmitted from said portable terminal device (1b) to said external equipment (2b) through said downstream signal line (5) returns to said portable terminal device (1b) via said upstream signal line (6); and
(*ii*) recognizing said external equipment (2b) as specific equipment based on a combination of the two kinds of monitoring results obtained in step (i).

19. A method as set forth in claim 17 or claim 18, further comprising the step of supplying, if said external equipment (2b) is recognized to be such specific equipment on said portable terminal device (1b), an operation voltage for said external equipment (2b) from an internal power supply (16) of said portable terminal device (1b) via said connecting means.

20. An external equipment recognizing program which instructs a computer of said portable terminal device (1) to recognize a type of external equipment (2) connected to said portable terminal device (1) via connecting means (15, 21) which includes an upstream signal line (6) that transfers a signal coming into said portable terminal device (1) and a downstream signal line (5) that transfers a signal going out from said portable terminal device (1) , said program instructing the computer to perform the steps of:
(*a*) sending-out a signal to said external equipment (2) through said downstream signal line (5) without any operation voltage supplied to said external equipment (2);
(*b*) receiving the signal returned from said external equipment (2) via a switch unit (22), which is provided on the external equipment side to short-circuit said downstream signal line (5) and upstream signal line (6); and
(*c*) recognizing said external equipment (2) as specific equipment having said switch unit (22), by receiving the signal in step (*b*).
